# EUROPEAN PATENT APPLICATION

(11) **EP 3 070 834 A1**
(43) Date of publication of application: **21.09.2016**
(21) Application number: 13889763.2
(22) Date of filing: 14.11.2013
(51) Int. Cl.: H02P 15/00, H02K 49/02

(54) **ELECTROMAGNETIC RETARDER**

(71) Applicant: TBK Co., Ltd., Machida-shi Tokyo 194-0045 (JP)
(72) Inventor: OBA Mitsuyoshi, Machida-shi Tokyo 194-0045 (JP); MIYOSHI Akihiro, Machida-shi Tokyo 194-0045 (JP); NISHIMURA Koichiro, Machida-shi Tokyo 194-0045 (JP)
(74) Representative: Kronthaler, Wolfgang N.K.
(86) International application number: PCT/JP2013/080801
(87) International publication number: WO 2015/071993

(57) **Abstract**

An electromagnetic type retarder having a main portion consisting of a stator having, a plurality of magnetic coils arranged along a circle and spaced apart from one another so as to form multi-phase connections, and of a steel rotor surrounding the stator and rotated according to the rotation of a tire; a control device; and a driving device consisting of at least two transistors opened and closed by a drive pulse from the control device, respectively. The multi phase connections are formed by the magnetic coils, the magnetic coils of each phase are connected with capacitors so as to form a resonance circuit, respectively, and each of the transistors is connected in series to at least two phase connections. The revolution speed of a rotary magnetic field induced in the magnetic coils by the rotation of the steel rotor is set smaller than the revolution speed of the steel rotor. A braking torque is controlled by turning ON and OFF the transistor inserted in one phase connection.

## Description

### FIELD OF THE INVENTION

The present invention relates to an electromagnetic type retarder, and more particularly, relates to an electromagnetic type retarder wherein a braking torque can be controlled.

### BACK GROUND OF THE ART

An electromagnetic type retarder for obtaining a braking torque by utilizing an electric eddy current is publicly known as shown in the Japanese patent material 1.

### PRIOR ART

### PATENT MATERIAL

Patent material 1: Japanese Patent application Laid-Open No. 125219/2008.

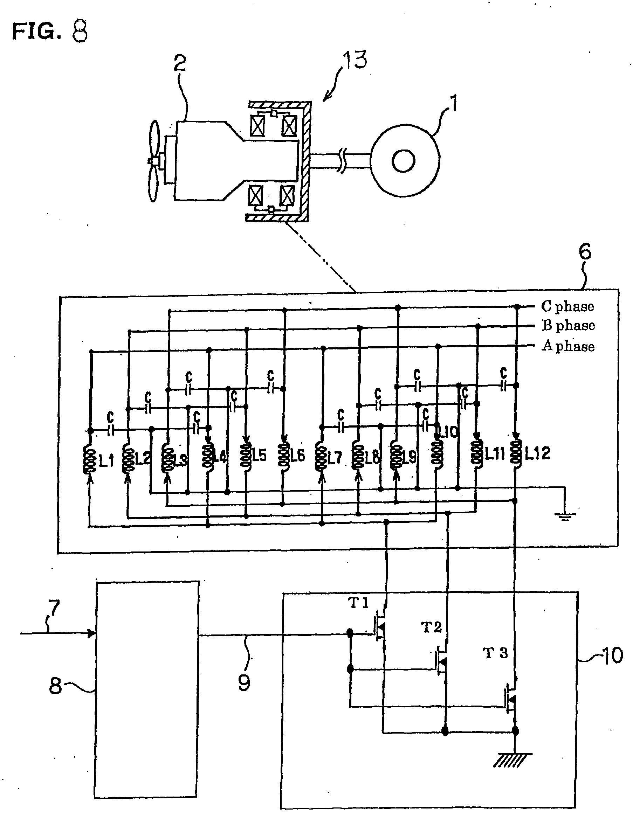

FIG.8 to FIG.10 show a conventional electromagnetic type retarder. In FIG.8, a reference numeral 1 denotes a tire of a car, 2 denotes an engine starter, 6 denotes a main portion of the electromagnetic type retarder, 8 denotes a control device for processing an operation signal 7, and 10 denotes a driving device consisting of transistors T1 to T3 opened and closed by a drive pulse 9 from the control device 8, respectively.

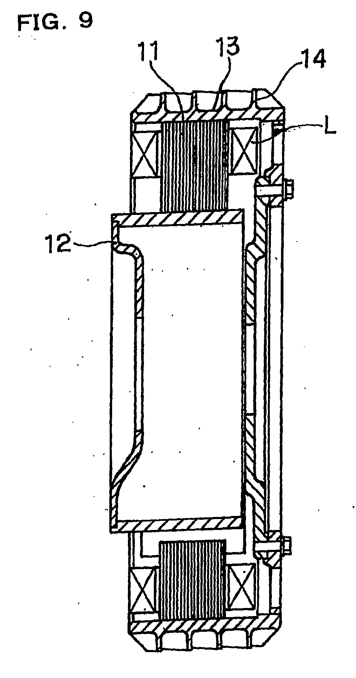

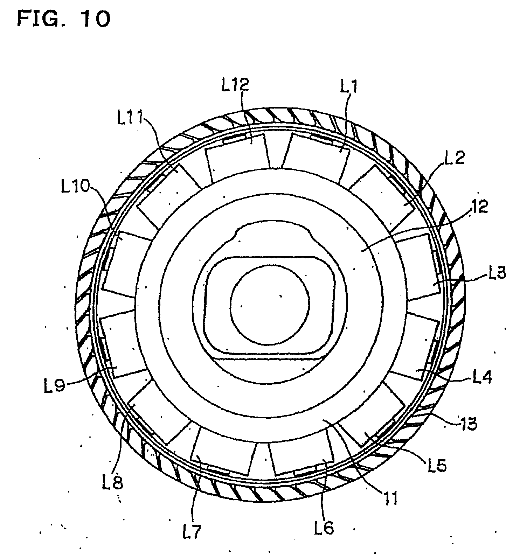

As shown in FIG. 9 and FIG. 10, the main portion 6 consists of a stator yoke 11, a magnetic coil L having magnetic coils L1 to L12 arranged along a circle and spaced apart from one another on the stator yoke 11, a steel rotor (drum) 13 surrounding the stator yoke 11 and rotated according to the rotation of the tire 1, each of magnetic coils L, to L12 having an iron core therein, and fins 14 provided on the outer peripheral surface of the still rotor 13. The magnetic coils L1 to L12 form three-phase connections of A phase, B phase and C phase.

Each of the magnetic coils L1, L2, L3, L7, L8 and L9 is opposite in polarity to each of the magnetic coils L4, L5, L6, L10, L11 and L12. The transistor T1 of the driving device 10 is connected in series to the A phase connection consisting of coils L1, L4, L7 and L10. The transistor T2 is connected in series to the B phase connection consisting of coils L2, L5, L8 and L11. The transistor T3 is connected in series to the C phase connection consisting of coils L3, L6, L9 and L12.

According to the conventional retarder, the drive pulse 9 is generated when the operation signal 7 is applied to the control device 8, so that the transistors T1 to T3 of the driving device 10 are turned ON, and resonance circuits consisting of magnetic coils L1 to L12 and capacitors C are formed.

An electric voltage induced in the magnetic coils by the residual magnetic field of the steel rotor 13 becomes a three-phase AC voltage of a specific frequency by the function of the resonance circuits consisting of the magnetic coils and the capacitors, when the revolution number of the steel rotor 13 becomes faster than that of the rotary magnetic field calculated from the resonance frequency of the magnetic coils and the capacitors. In this state, an eddy current is generated in the steel rotor 13 according to the difference between the revolution number Ns of the rotary magnetic field generated by the three-phase AC voltage and the revolution number Nd of the steel rotor 13. By the eddy current generated in the steel rotor 13, the voltage of the magnetic coils is increased, so that the eddy current generated in the steel rotor 13 is further increased. The increase of the eddy current function is stopped at a point that the magnetic field is not increased even if the voltage of magnetic coils is increased. The eddy current in the steel rotor 13 generates a joule heat, so that a larger braking power is applied to the steel rotor 13. The braking power is converted into heat and the heat is radiated into the atmosphere from the fins 14 provided on the outer peripheral surface of the steel rotor 13.

### SUMMARY OF THE INVENTION

### The task to be solved by the invention

In the conventional electromagnetic type retarder, an AC current passing through the magnetic coils L1 to L12 is increased or decreased by the phase control wherein the ON time of the AC current is varied generally in order to control the braking torque. In such phase control, however, higher harmonic wave components in the current passing through the electromagnetic coils become large, so that the resonance of the resonance circuits becomes unstable. Further, in the conventional type retarder, it is difficult to adjust the braking torque exactly to the required value. If the braking torque is too strong, the drum and the electromagnetic coils are overheated, and the service life of the electromagnetic type retarder is shortened.

An object of the present invention is to obviate the above defects.

According to experiments and study by the inventor, it is found that it is possible to eliminate the rotary magnetic field and to stop the operation of the retarder by turning OFF only two transistors T1 for the A phase and T2 for the B phase instead of the three transistors T1 to T3 for the A phase, B phase and C phase, for example. Further, it is found that it is possible to adjust the braking torque of the electromagnetic type retarder by continuing the resonance of the coils for the A phase and the C phase, even in a case that the resonance of the coils for the B phase is not continued, and by controlling the output voltage of the electromagnetic type retarder to a value in proportion to the rate of ON time and OFF time of the transistor T2 for the B phase, for example.

Accordingly, in the present invention, the transistor T3 for the C phase is not used, the electromagnetic type retarder is operated by the two-phase control using only the transition T1 for the A phase and the transistor T2 for the B phase, and the braking torque of the electromagnetic type retarder is controlled by one-phase control using only the transistor T2 for the B phase. Manner for solving the task.

An electromagnetic type retarder according to the present invention is characteriz0ed by comprising a main portion consisting of a stator having a plurality of magnetic coils arranged along a circle and spaced apart from one another so as to form multi-phase connections, each of the magnetic coils having an iron core therein, and of a steel rotor surrounding the stator and rotated according to the rotation of a tire; a control device; and a driving device consisting of at least two transistors opened and closed by a drive pulse from the control device, respectively, wherein the magnetic coils of each phase connection are connected with capacitors so as to form a resonance circuit, respectively, and each of the transistors is connected in series to at least two phase connections, wherein the revolution speed of a rotary magnetic field induced in the magnetic coils by the rotation of the steel rotor is set smaller than the revolution speed of the steel rotor, and wherein a braking torque is controlled by turning ON and OFF the transistor inserted in one phase connection.

The ON and OFF control of the transistor is carried out at such a timing that the phase current of the phase connection is zero.

The ON state of the transistor inserted in one phase connection is maintained during each cycle from a point that a voltage applied on the phase connection reaches to a peak value to a point that the voltage reaches to the next peak value, in case that a duty ratio is 100%.

The ON state of the transistor inserted in one phase connection is maintained during continuous three cycles, each cycle being from a point that a voltage applied on the transistor reaches to a peak value to a point that the voltage reaches to the next peak value, wherein after one cycle has been passed, the ON state of the transistor is maintained during continuous three cycles again, and wherein a manner similar to the above switching manner of the ON and OFF states of the transistor is repeated, in case that the duty ratio is 75%.

The ON state of the transistor inserted in one phase connection is maintained during one cycle from a point that a voltage applied on the phase connection reaches to a peak value to a point that the voltage reaches to the next peak value, wherein after one cycle has been passed, the ON state of the transistor is maintained during one cycle again, and wherein a manner similar to the above switching manner of the ON and OFF states of the transistor is repeated, in case that the duty ratio is 50%. The ON state of the transistor inserted in one phase connection is maintained during one cycle from a point that a voltage applied on the phase connection reaches to a peak value to a point that the voltage reaches to the next peak value, wherein after continuous three cycles have been passed, the transistor is turned ON during one cycle again, and wherein a manner similar to the above switching manner of the ON and OFF states of the transistor is repeated, in case that the duty ratio is 25%.

### EFFECT OF THE INVENTION

According to the electromagnetic type retarder of the present invention, following effects can be obtained.
(1) The stable resonance can be obtained, because the ON, OFF control of the phase connections is carried out at such a timing that the phase current of the phase connection becomes zero (at the timing that the voltage becomes peak), so that the AC current has no distortion, that is, no higher harmonic current is generated.
(2) The generation of the switching noise is little, because the switching of the phase connections is carried out at such a timing that the phase current is zero.
(3) The electromagnetic type retarder can be made with low cost, because the braking torque can be controlled without using one transistor for one phase, such as the C phase, for example, among the three transistors for three phases.
(4) The braking torque required to the electromagnetic type retarder can be obtained in cases of many duty ratios, and the braking torque can be controlled suitably.
(5) The service life of the electromagnetic type retarder can be prolonged, because the braking torque can be adjusted to the desired value, so that the overheat of the drum and the electromagnetic coils can be prevented.
(6) The OFF cycle time can be shortened and the braking torque can be controlled with less fluctuation in case that the output value is determined.

### BRIEF DESCRIPTION OF THE DRAWINGS

FIG.1 is a schematic depiction of an electromagnetic type retarder according to the present invention.
FIG.2 is a flow chart showing the operation of the electromagnetic type retarder according to the present invention.
FIG.3 shows waveforms of the phase voltage of the electromagnetic type retarder according to the present invention, in case that the duty ratio is 100%.
FIG.4 shows waveforms of the phase voltage of the electromagnetic type retarder according to the present invention, in case that the duty ratio is 75%.
FIG.5 shows waveforms of the phase voltage of the electromagnetic type retarder according to the present invention, in case that the duty ratio is 50%.
FIG.6 shows waveforms of the phase voltage of the electromagnetic type retarder according to the present invention, in case that the duty ratio is 25%.
FIG.7 is a graph depicting the relationship of a generated braking torque and a revolution number of a rotor of the electromagnetic type retarder according to the present invention in case of each duty ratio.
FIG.8 is a schematic depiction of a conventional electromagnetic type retarder.
FIG.9 is a vertically sectional side view of a main portion of the conventional electromagnetic type retarder shown in FIG.8.
FIG.10 is a vertically sectional front view of the main portion of the conventional electromagnetic type retarder shown in FIG.8.

### DESCRIPTION OF THE PREFERRED EMBODIMENTS

An embodiment of an electromagnetic type retarder according to the present invention will be explained with reference to the drawings.

### Embodiment 1

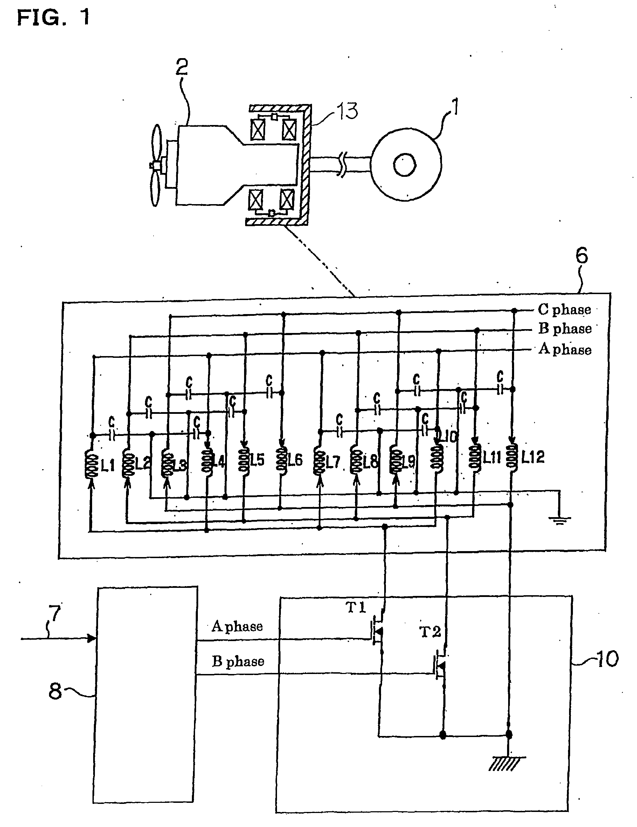

FIG.1 depicts a first embodiment of an electromagnetic type retarder according to the present invention. Parts of the retarder which are similar to corresponding parts of the conventional retarder shown in FIG.8 to FIG.10 have been given corresponding reference numerals and need not be further redescribed. The electromagnetic type retarder of the present invention comprises a main portion 6, a control device 8 for processing an operation signal 7, and a driving device 10 consisting of transistors T1 and T2 opened and closed by a drive pulse of A phase and a drive pulse of B phase from the control device 8, respectively. The main portion 6 comprises a stator yoke 11, a magnetic coil L consisting of magnetic coils L1 to L12, each having an iron core therein, arranged along an outer peripheral surface of the stator yoke 11 and spaced apart from one another, and a steel rotor 13 surrounding the stator yoke 11 and rotated according to the rotation of the tire 1. The magnetic coils L1 to L12 form three-phase connections of A phase, B phase and C phase. Each of resonance circuits is formed by each of the magnetic coils L1 to L12 and each of capacitors C. The revolution speed of a rotary magnetic field induced in the magnetic coils by the rotation of the steel rotor 13 is set smaller than that of the rotary magnetic field. The transistor T1 in the driving device 10 is connected in series to the A phase connection consisting of the magnetic coils L1, L4, L7 and L10, and the transistor T2 in the driving device 10 is connected in series to the B phase connection consisting of the magnetic coils L2, L5, L8 and L11.

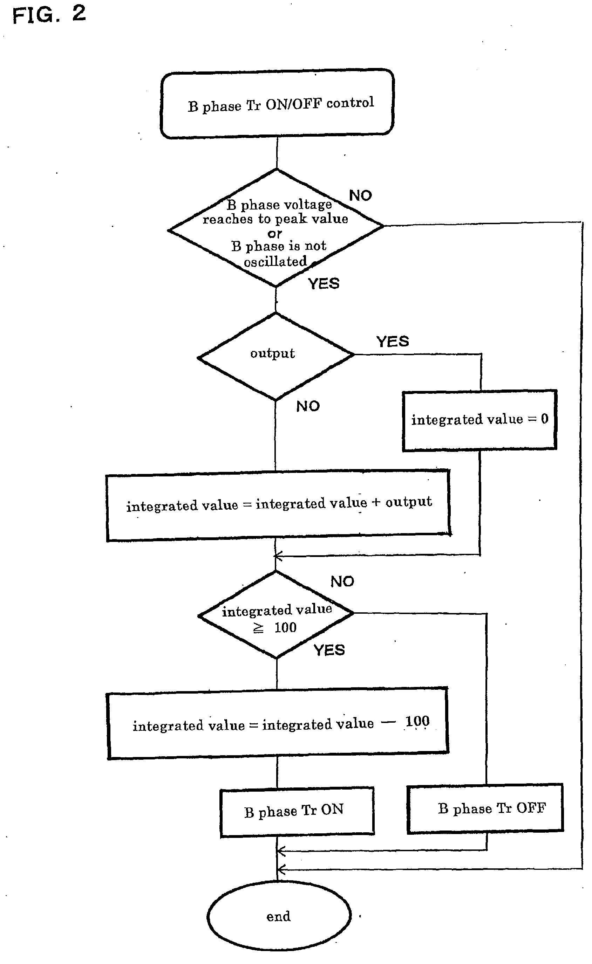

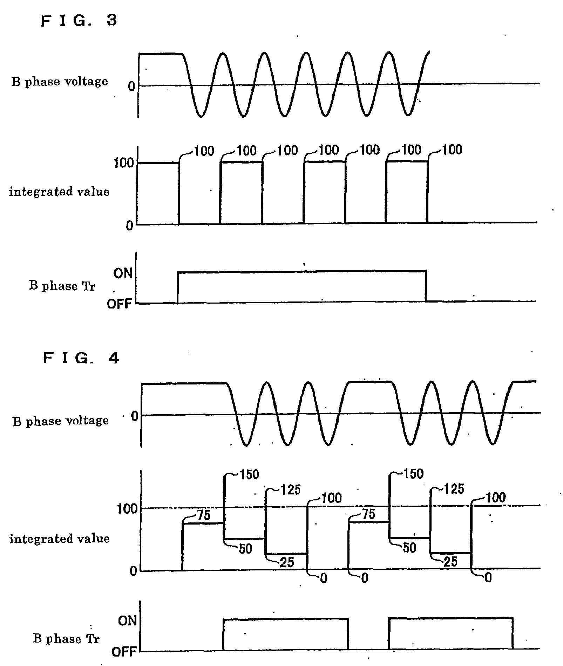

In the present invention, a passing time of the current passing through the one phase connection, for example, the B phase connection among the connections of A phase and B phase is controlled intermittently by turning ON and OFF the transistor T2. That is, as shown in FIG.2 and FIG.3, in case that a duty ratio is 100%, a control output is integrated if the control output is not 0% when the B phase voltage reaches to the peak value, and the transistor T2 for the B phase is turned ON and the ON state of the transistor T2 is continued when the integrated value of the control output reaches to 100%. The transistor T2 is maintained in OFF state if the integrated value is not reached to 100%. In Fig.3, the wave forms of A phase and C phase are omitted.

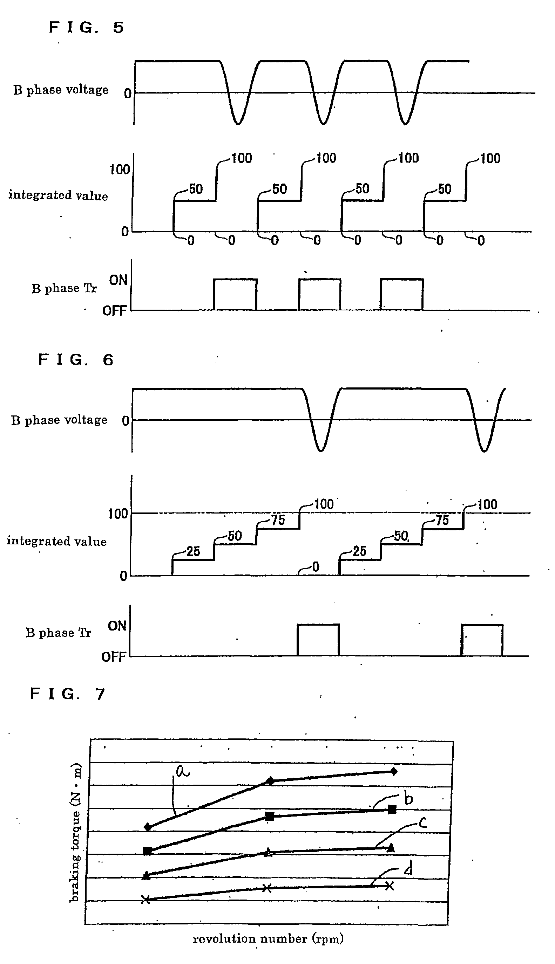

In case that the duty ratio is 75%, as shown in FIG.4, when the integrated value reaches to 100%, the transistor T2 for the B phase is turned ON and the ON state of the transistor T2 is maintained during continuous three cycles after the B phase voltage reaches to the peak value, after one cycle has been passed, the ON state of the transistor T2 is maintained during continued three cycles again, and the above switching manner of the ON state of the transistor T2 is repeated.
In case that the duty ratio is 50%, as shown in FIG.5, when the integrated value reaches to 100%, the transistor T2 for the B phase is turned ON and the ON state of the transistor T2 is maintained during one cycle after the B phase voltage reaches to the peak value, after one cycle has been passed, the ON state of the transistor T2 for the B phase is maintained during one cycle again, and the switching manner of the ON state of the transistor T2 is repeated. In case that the duty ratio is 25%, as shown in FIG.6, when the integrated value reaches to 100%, the transistor T2 for the B phase is turned ON and the ON state of the transistor T2 is maintained during one cycle after the B phase voltage reaches to the peak value, after three cycles have been passed the ON state of the transistor T2 for the B phase is maintained for one cycle again, and the switching manner of the ON state of the transistor T2 is repeated.

FIG.7 is a diagram for explaining the relationship of a braking torque and a revolution number of the steel rotor 13 according to the electromagnetic type retarder of the present invention, wherein symbols a to d show lines in cases of the duty ratio of 100%, 75%, 50% and 25%, respectively. According to the present invention, the braking torque can be controlled continuously with respect to the wide range of the duty ratios.

### EXPLANATION OF CORD

- 1: tire
- 2: stator
- 6: main portion of retarder
- 7: operation signal
- 8: control device
- 9: drive pulse
- 10: driving device
- 11: stator yoke
- 12: stator
- 13: steel rotor
- 14: fin

## Claims

1. An electromagnetic type retarder comprising a main portion consisting of a stator having a plurality of magnetic coils arranged along a circle and spaced apart from one another so as to form multi-phase connections, each of the magnetic coils having an iron core therein, and of a steel rotor surrounding the stator and rotated according to the rotation of a tire; a control device; and a driving device consisting of at least two transistors opened and closed by a drive pulse from the control device, respectively, wherein the magnetic coils of each phase connection are connected with capacitors so as to form a resonance circuit, respectively, and each of the transistors is connected in series to at least two phase connections, wherein the revolution speed of a rotary magnetic field induced in the magnetic coils by the rotation of the steel rotor is set smaller than the revolution speed of the steel rotor, and wherein a breaking torque is controlled by turning ON and OFF the transistor inserted in one phase connection.

2. The electromagnetic type retarder as claimed in claim 1, wherein the ON and OFF control of the transistor is carried out at such a timing that the phase current of the phase connection is zero.

3. The electromagnetic type retarder as claimed in claim 1 or 2, wherein the ON state of the transistor inserted in one phase connection is maintained during each cycle from a point that a voltage applied on the phase connection reaches to a peak value to a point that the voltage reaches to the next peak value, in case that a duty ratio is 100%.

4. The electromagnetic type retarder as claimed in claim 1 or 2, wherein the ON state of the transistor inserted in one phase connection is maintained during continuous three cycles, each cycle being from a point that a voltage applied on the transistor reaches to a peak value to a point that the voltage reaches to the next peak value, wherein after one cycle has been passed, the ON state of the transistor is maintained during continuous three cycles again, and wherein a manner similar to the above switching manner of the ON and OFF states of the transistor is repeated, in case that the duty ratio is 75%.

5. The electromagnetic type retarder as claimed in claim 1 or 2, wherein the ON state of the transistor inserted in one phase connection is maintained during one cycle from a point that a voltage applied on the phase connection reaches to a peak value to a point that the voltage reaches to the next peak value, wherein after one cycle has been passed, the ON state of the transistor is maintained during one cycle again, and wherein a manner similar to the above switching manner of the ON and OFF states of the transistor is repeated, in case that the duty ratio is 50%.

6. The electromagnetic type retarder as claimed in claim 1 or 2, wherein the ON state of the transistor inserted in one phase connection is maintained during one cycle from a point that a voltage applied on the phase connection reaches to a peak value to a point that the voltage reaches to the next peak value, wherein after continuous three cycles have been passed, the transistor is turned ON during one cycle again, and wherein a manner similar to the above switching manner of the ON and OFF states of the transistor is repeated, in case that the duty ratio is 25%.
